# FASCICULE DE BREVET EUROPEEN

(11) **EP 3 318 902 B1**
(45) Date de publication et mention de la délivrance du brevet: **16.02.2022**
(21) Numéro de dépôt: 17208553.2
(22) Date de dépôt: 14.04.2017
(51) Int. Cl.: G01V 3/12, G01V 3/08

(54) **DÉTECTEUR D'OBJETS OU DE MATIÈRES NON AUTORISÉES DISSIMULÉS DANS UNE CHAUSSURE**
ERKENNUNGSGERÄT VON GEGENSTÄNDEN ODER NICHT ERLAUBTEN STOFFEN, DIE IN EINEM SCHUH VERSTECKT SIND
DETECTOR OF UNAUTHORISED OBJECTS OR MATERIALS CONCEALED IN A SHOE

(30) Priorité: 15.04.2016 FR 1653385
(43) Date de publication de la demande: 09.05.2018
(62) Demande divisionnaire de: 17166707.4
(73) Titulaire: Manneschi, Alessandro, 52100 Arezzo (IT)
(72) Inventeur: Manneschi, Alessandro, 52100 Arezzo (IT)
(74) Mandataire: Regimbeau

(56) Documents cités:
- WO-A2-2005/036207
- US-A1- 2008 036 592
- US-A1- 2015 369 756

## Description

La présente invention concerne le domaine des détecteurs conçus pour la détection d'objets ou matières non autorisés dans une zone à accès protégé.

Il apparaît aujourd'hui nécessaire de contrôler avec une grande fiabilité les tentatives d'introduction ou de sortie de certains produits, par exemple mais non exclusivement des matières explosives, dans ou hors d'une zone sensible.

Le problème ainsi posé couvre un très large éventail de situations, qui englobe notamment et non limitativement la tentative d'introduction de produits dans une zone protégée, tel qu'un magasin, une école, une gare, un organisme public voir privé, ou la tentative de sortie de produits hors d'un périmètre défini, par exemple en cas de vol dans une entreprise ou sur un site protégé.

Il s'avère de nos jours que les individus qui tentent de sortir frauduleusement un produit hors d'une zone protégée ou qui tentent d'introduire un tel produit, utilisent souvent les chaussures pour dissimuler le produit en question.

Ce phénomène semble dû essentiellement au fait que cette zone est difficile à contrôler aisément visuellement ou par palpage manuel.

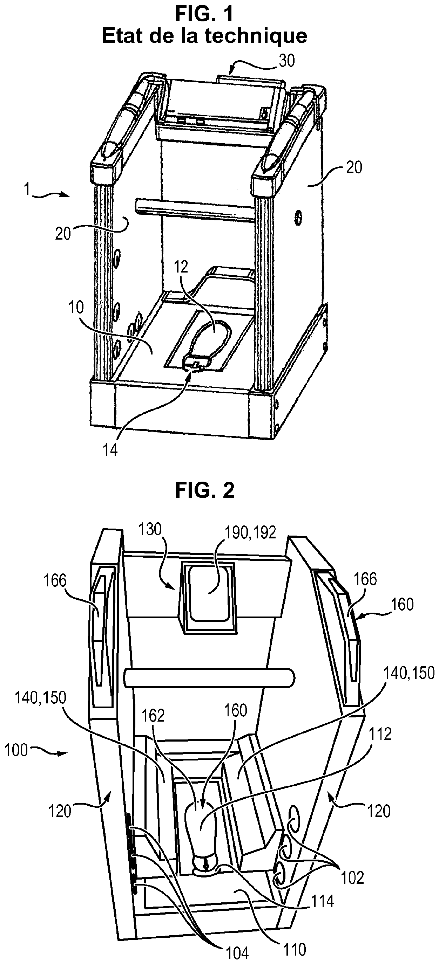

Le demandeur a déjà proposé des dispositifs du type illustré sur la figure 1 annexée, qui comprennent un bâti 1 qui comporte :
- une embase support 10 formée d'un plateau rectangulaire en forme de marche dont la surface supérieure plane comporte un dessin ou empreinte 12 et une butée 14 destinés à accueillir et positionner un pied unique d'un individu revêtu d'une chaussure,
- deux panneaux latéraux symétriques 20 qui logent des moyens de détection, et
- un module d'informations 30.

On trouvera des exemples du dispositif illustré sur la figure 1 dans les documents FR 2860631, EP 1574879, FR 2889338 et FR 2911212.

Les moyens de détection précités décrits dans les documents mentionnés peuvent être formés de bobinages pour la détection de métaux, de moyens de prélèvement, par exemple sous forme de buses d'aspiration, pour le prélèvement de vapeurs ou de traces de particules, par exemple de stupéfiants ou d'explosifs, de moyens d'analyse à base de résonance magnétique nucléaire comprenant par exemple des bobines d'Helmholtz, ou encore des moyens d'analyse d'impédances complexes ou des détecteurs de radiations radioactives.

Malgré les progrès apportés par les dispositifs décrits dans les documents précités, sur certains sites sensibles on est contraint encore aujourd'hui à inviter les personnes quittant le site ou accédant au site à enlever leurs chaussures afin de tenter d'améliorer l'inspection. Mais malgré les contraintes et l'inconfort résultant d'une telle situation, un examen visuel de la chaussure retirée ne permet pas toujours de totalement sécuriser l'inspection. Le personnel intervenant ne peut pas en effet déterminer si un objet ou une matière n'est pas camouflé dans une cavité interne non directement accessible de la chaussure, notamment la semelle de celle-ci.

Le document WO2005/036207 décrit un scanner incluant un réseau de capteurs capacitifs.

La présente invention a par conséquent pour objectif de proposer de nouveaux moyens permettant d'améliorer la fiabilité de détection d'objets, produits ou matières susceptibles d'être camouflés dans une chaussure.

Ce but est atteint dans le cadre de la présente invention grâce à un dispositif qui comprend en combinaison :
- une embase support conçue pour recevoir au moins un pied revêtu de sa chaussure, d'un individu à contrôler,
- des moyens émetteurs micro-ondes et des moyens récepteurs micro-ondes destinés à être placés respectivement de part et d'autre de la semelle de la chaussure,
- des moyens de mesure de la largeur d'un élément intercalé entre les moyens émetteurs/récepteurs micro-ondes,
- des moyens d'analyse d'au moins un paramètre du délai de transmission entre les moyens émetteurs/récepteurs micro-ondes et/ou
   de l'amplitude du signal transmis entre les moyens émetteurs/récepteurs micro-ondes, et
- des moyens de normalisation de l'analyse précitée par rapport à une unité de taille de largeur standard, sur la base de la largeur obtenue à partir des moyens de mesure de largeur.

Selon d'autres caractéristiques avantageuses de l'invention :
- la fréquence des micro-ondes émises par les émetteurs est comprise dans la gamme 5GHz-30GHz, avantageusement 12GHz-20GHz,
- le dispositif comprend une pluralité de moyens émetteurs/récepteurs micro-ondes répartis sur la longueur de l'embase support,
- les moyens de mesure de la largeur de l'élément intercalé entre les moyens émetteurs/récepteurs micro-ondes comprennent des émetteur/récepteur infra-rouges adaptés pour mesurer le temps de propagation aller-retour entre un émetteur infra-rouge et le récepteur infra-rouge associés,
- le dispositif comprend une pluralité de moyens émetteurs/récepteurs infra-rouges,
- le dispositif comprend en outre des moyens de mesure de la capacité électrique formée entre la surface inférieure de la semelle et le pied, soit essentiellement de la capacité électrique formée par la semelle d'une chaussure placée sur l'embase support, afin de déterminer l'épaisseur de cette semelle,
- le dispositif comprend en outre des moyens, de préférence à base de micro-ondes, adaptés pour déceler une stratification par empilement vertical, dans la semelle, par détection d'échos successifs suite à une émission d'ondes vers la semelle,
- le dispositif comprend un moyen adaptateur de couplage micro-ondes, intercalé entre les transducteurs micro-ondes et une plaque support de pied,
- le moyen adaptateur comprend une pyramide engagée dans chaque cornet associé à un transducteur micro-ondes, venue de matière avec la plaque support de pied,
- le dispositif comprend des moyens de normalisation du signal issu des moyens de détection d'une stratification verticale, sur la base d'un signal représentatif de la hauteur estimée de la semelle,
- le dispositif comprend des poignées placées en partie supérieure de panneaux solidaires de l'embase support,
- lesdites poignées comportent des électrodes,
- il est prévu un générateur électrique placé en série desdites poignées et électrodes placées sur l'embase support,
- le générateur électrique est adapté pour générer une tension de l'ordre de 1 volt,
- les moyens émetteurs micro-ondes et les moyens récepteurs micro-ondes associés placés respectivement de part et d'autre de la semelle de la chaussure sont adaptés pour une détection sur un moyen récepteur du signal provenant d'un moyen émetteur placé directement en regard et du signal provenant d'un moyen émetteur placé en oblique par rapport au moyen récepteur,
- le dispositif comprend plusieurs séries de moyens de détection comprenant chacune plusieurs moyens de détection répartis géographiquement de manière similaire pour l'ensemble desdites séries de moyens de détection,
- l'embase support comprend un plateau sous forme d'une marche revêtue d'un repère de positionnement de chaussure et de deux panneaux latéraux,
- l'embase est de préférence adaptée pour recevoir un pied unique de l'individu sous test,
- le dispositif comprend en outre des moyens d'analyse auxiliaires choisis dans la gamme comprenant des bobinages de détection de métaux, des moyens de prélèvement de vapeurs ou de traces de particules, des moyens d'analyse type résonance magnétique nucléaire, des moyens d'analyse d'impédance complexe et/ou des moyens détecteurs de radiations radio-actives.

L'invention concerne également un procédé d'analyse des signaux issus des différents moyens conformes à la présente invention pour générer une alarme en cas de détection d'une anomalie.

Selon une première caractéristique avantageuse du procédé de l'invention, le procédé comprend au moins une étape de normalisation de l'amplitude de signaux obtenus, par exemple l'amplitude de l'absorption de micro-ondes par une bande de semelle horizontale ou le temps de propagation de micro-ondes dans une telle bande de semelle horizontale, en fonction d'une second mesure, par exemple une mesure de largeur de semelle, ou encore par exemple de la répartition temporelle d'échos se propageant verticalement en fonction d'une mesure de hauteur de la semelle.

Selon une autre caractéristique avantageuse du procédé de l'invention, le procédé comprend l'exploitation d'au moins deux des mesures suivantes : une mesure de l'amplitude d'absorption de micro-ondes par une bande horizontale de la semelle, une mesure du temps de propagation de micro-ondes dans une bande horizontale de la semelle, une mesure de la largeur d'une bande horizontale de semelle, une mesure de la hauteur de la semelle à l'aide des moyens capacitifs ou par analyse d'une image prélevée par un système de prise de vue, une détection de stratification verticale d'une semelle par détection de réflexions de micro-ondes injectées verticalement dans la semelle.

D'autres caractéristiques, buts et avantages de la présente invention apparaîtront à la lecture de la description détaillée qui va suivre, et en regard des dessins annexés, donnés à titre d'exemples non limitatifs et sur lesquels :
- la figure 1 précédemment décrite représente un dispositif de détection conforme à l'état de la technique,
- la figure 2 représente la structure générale d'un dispositif conforme à la présente invention,
- la figure 3 représente une vue similaire à la figure 2 et illustre la structure générale de moyens émetteurs/récepteurs micro-ondes conformes à la présente invention destinés à être disposés de part et d'autre horizontalement d'une semelle de chaussure,

- la figure 4 représente une variante de réalisation conforme à la présente invention des moyens émetteurs/récepteurs micro-ondes illustrés sur la figure 3,
- la figure 5 représente une vue similaire à la figure 2 et illustre plus précisément la structure de moyens émetteur infra-rouges conformes à la présente invention pour la détection de la largeur de l'élément intercalé entre les moyens émetteurs/récepteurs micro-ondes,
- la figure 6 représente schématiquement la structure d'électrodes prévues sur une empreinte placée sur la surface supérieure d'une embase,
- la figure 7 représente une vue similaire à la figure 2 et illustre le fonctionnement du dispositif en mesure capacitive,
- la figure 8 représente une vue schématique d'un mode de réalisation particulier de moyens à base de micro-ondes, adaptés pour déceler une stratification par empilement vertical, dans la semelle, par détection d'échos successifs suite à une émission d'ondes vers la semelle,

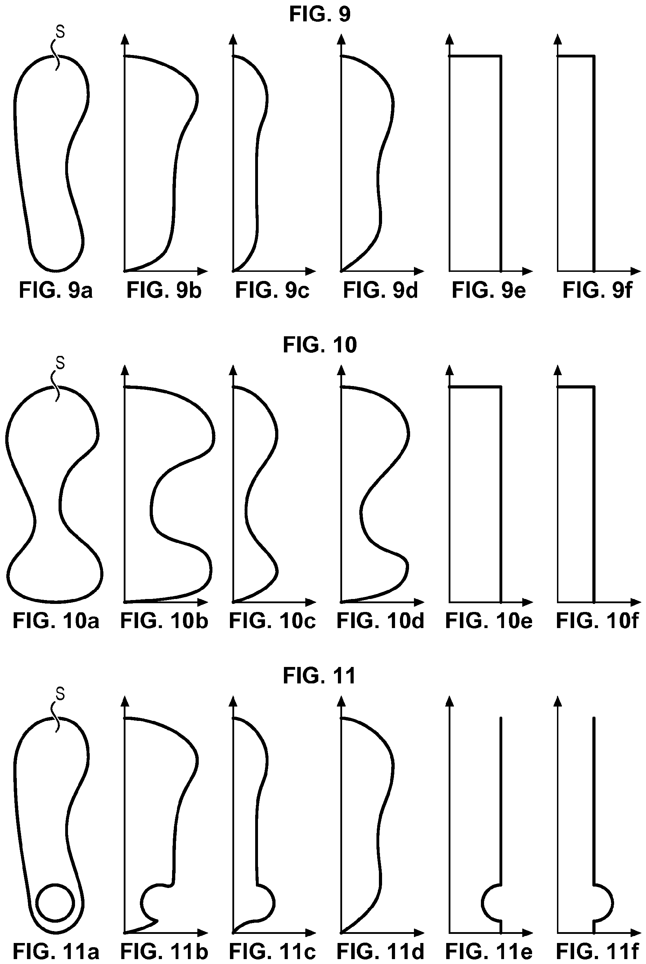

- la figure 9 représente schématiquement l'impact d'une normalisation conforme à la présente invention du signal issu des moyens émetteurs micro-ondes et des moyens récepteurs micro-ondes placés respectivement de part et d'autre de la semelle de la chaussure, la figure 9a représentant schématiquement le profil d'une semelle de chaussure formée d'un matériau homogène, la figure 9b représentant la courbe de délai de transmission mesurée à l'aide des émetteurs/récepteurs microondes, la figure 9c représentant la courbe d'absorption mesurée à l'aide des mêmes moyens émetteurs/récepteurs microondes, la figure 9d représentant la courbe de mesure de largeur obtenue à l'aide des moyens émetteurs/récepteurs infrarouge et les figures 9e et 9f représentant des courbes de délai de transmission et d'absorption basées sur les courbes des figures 9b et 9c, mais après normalisation par unité de taille sur la base de la courbe de la figure 9d,
- la figure 10 représente des vues respectivement similaires à la figure 9 pour un profil différent de semelle de chaussure,
- la figure 11 représente des vues respectivement similaires à la figure 9 pour une semelle de chaussure qui loge un corps non autorisé,
- la figure 12 représente schématiquement un circuit de commande électrique du dispositif conforme à la présente invention,

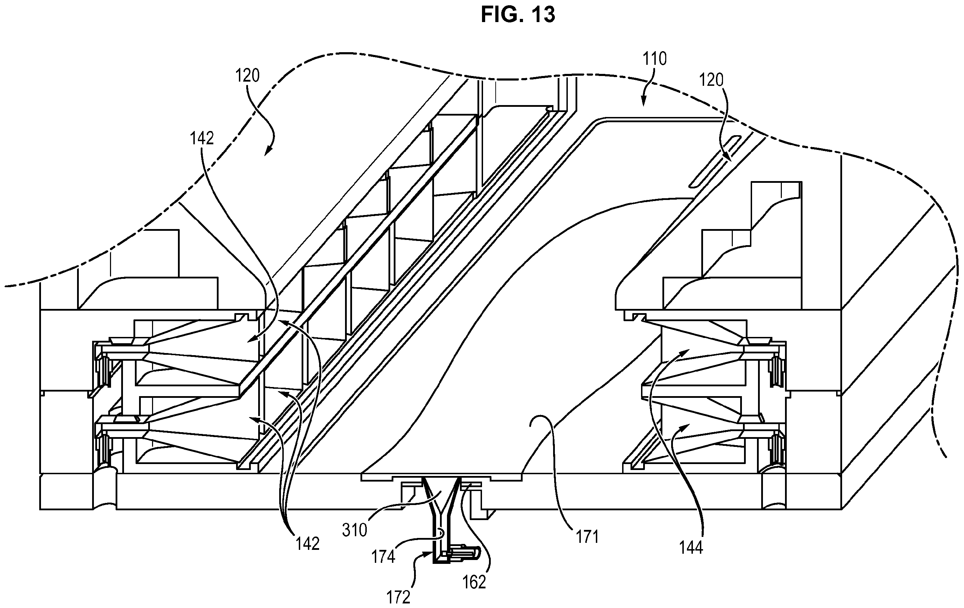

- la figure 13 représente une vue partielle en perspective de la base d'un système conforme à la présente invention,

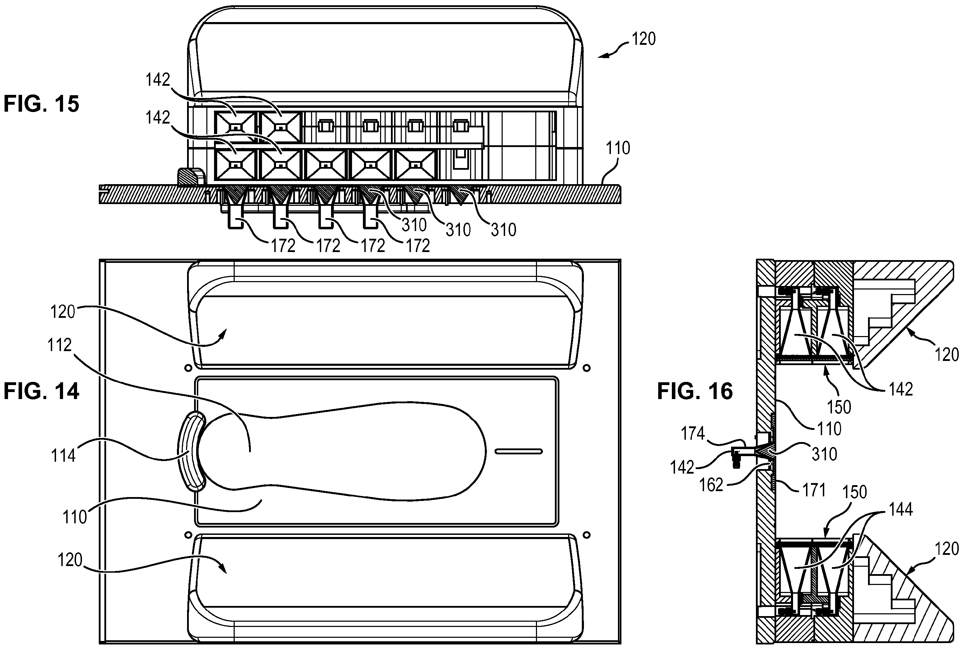

- les figures 14, 15 et 16 représentent respectivement des vues de dessus, en coupe partielle longitudinale et en coupe partielle transversale, d'un système conforme à la présente invention,
- les figures 17, 18 et 19 représentent respectivement des vues de dessus, en coupe verticale et en perspective, d'un moyen adaptateur de couplage micro-ondes conforme à la présente invention,

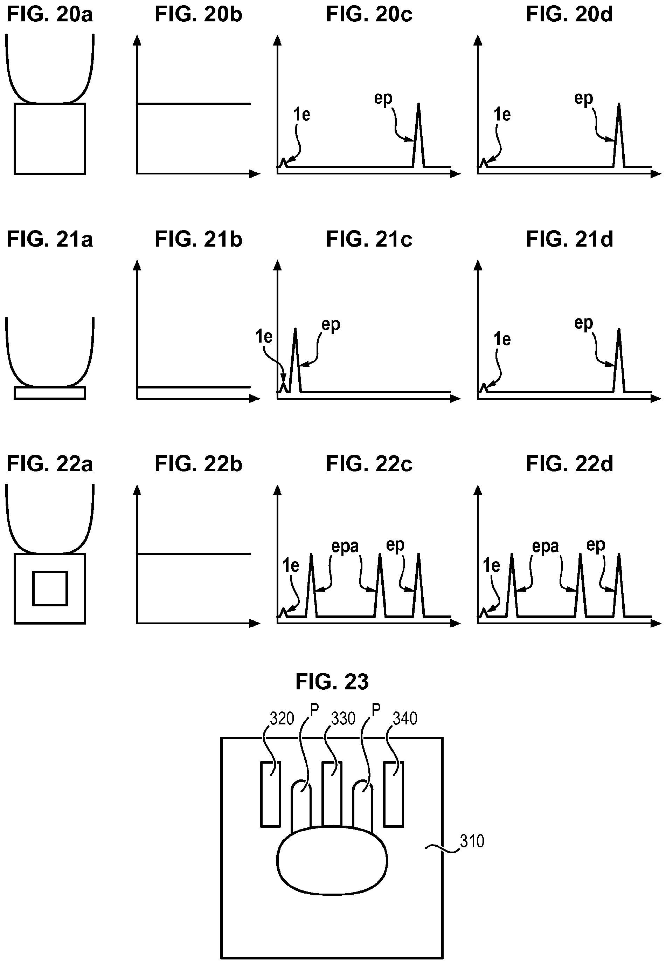

- les figures 20, 21 et 22 représentent la normalisation du signal obtenu en sortie d'un détecteur vertical, en fonction de la hauteur de la semelle, conforme à la présente invention, plus précisément sur les figures 20, 21 et 22 les figures ayant un indice a représentent schématiquement et respectivement trois cas de semelle haute, basse et comportant un corps étranger, les figures ayant un indice b représentent un signal de mesure de hauteur de la semelle, les figures ayant un indice c représentent les échos obtenus en sortie d'un détecteur vertical avant normalisation et les figures ayant un indice d représentent le même signal après normalisation, et
- la figure 23 représente schématiquement une variante de réalisation conforme à la présente invention selon laquelle l'embase support est conçue pour recevoir simultanément les deux pieds d'un individu sous test.

On retrouve sur les figures 2 et suivantes annexées, la structure générale d'un dispositif conforme aux documents décrits précédemment FR 2860631, EP 1574879, FR 2889338 et FR 2911212. Pour cette raison, la structure générale du dispositif représenté sur les figures 2 et suivantes ne sera pas décrite dans le détail par la suite.

L'on rappelle cependant que l'on retrouve sur les figures 2 et suivantes un dispositif comprenant un bâti 100 qui comporte :
- une embase support 110 formée d'un plateau rectangulaire en forme de marche dont la surface supérieure plane comporte un dessin 112 et une butée 114 destinés à accueillir et positionner un pied unique revêtu d'une chaussure,
- deux panneaux latéraux symétriques 120 qui logent des moyens de détection, et
- un module d'informations 130.

Le dispositif représenté sur les figures 2 et suivantes peut être conforme quant à sa géométrie, ses dimensions, le tracé du repère de positionnement 112, de la butée 114, de la nature des messages affichés sur le module 130, aux dispositions décrites dans les documents précités.

Il en est de même d'éventuels accessoires type moyens de tri aléatoire d'individus soumis à l'analyse, des fréquences mises en œuvre pour détecter les métaux et/ou de tout capteur de mise en place d'une chaussure sur le dessin 112 ou encore d'installation d'un pied contre les deux panneaux 120 pour initier le traitement.

Sans que cette disposition ne soit limitative, de tels moyens de détection de l'installation d'une chaussure dans le dispositif 100, plus précisément sur le repère 112, contre la butée 114, peuvent être formés d'une pluralité de cellules photoélectriques 102, 104 disposées respectivement en regard sur les deux panneaux 120 de sorte qu'un faisceau optique émise par une cellule émettrice 102 en direction d'une cellule réceptrice 104 en regard, soit interrompu lors de la mise en place d'un pied.

Comme on le voit sur les figures 2 et suivantes, le dispositif conforme à l'invention comprend en outre des moyens de détection additionnels 140, 150 et 160 sur l'embase support 110.

Plus précisément selon la réalisation de l'invention illustrée sur les figures 2 et suivantes, il est prévu des moyens émetteurs/récepteurs micro-ondes 140 au niveau de l'interface de jonction entre la surface supérieure de l'embase support 110 et les panneaux latéraux 120, pour une mesure de temps de transmission et une mesure d'absorption, associés à des moyens émetteurs/récepteurs infra-rouges 150 pour la mesure de la largeur de la partie de la chaussure intercalée entre les moyens émetteurs/récepteurs micro-ondes 140.

Il est également prévu de préférence des moyens de mesure capacitifs 160. Ceux-ci comprennent des électrodes 162 placées au niveau de l'empreinte 112 et des électrodes 166 placées en partie supérieure des panneaux 120. Ils seront définis plus en détail par la suite.

On va tout d'abord décrire la structure des moyens émetteurs/récepteurs micro-ondes 140.

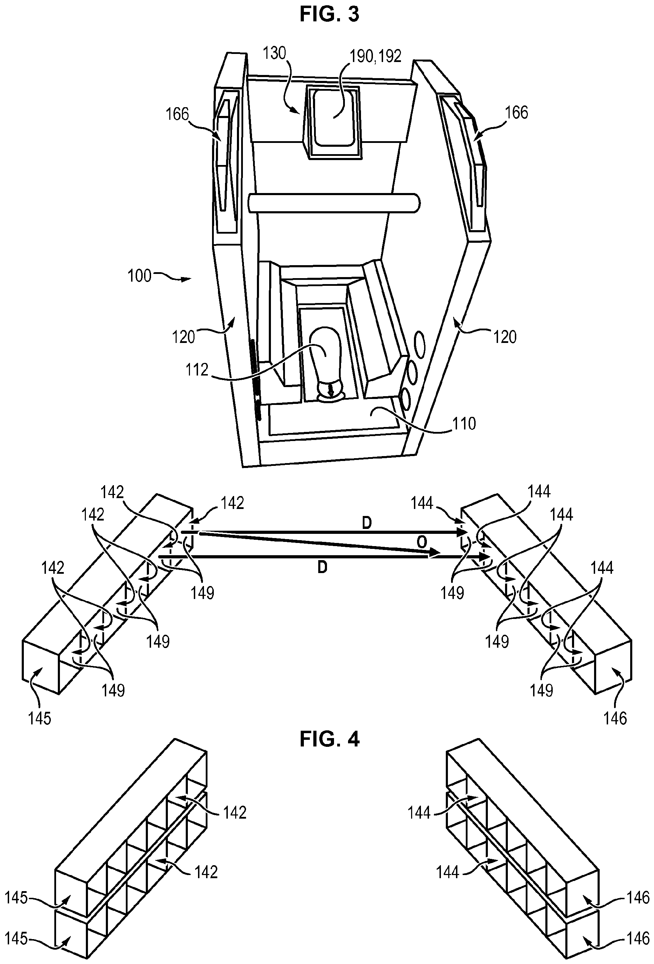

Comme on l'a schématisé sur la figure 3, de préférence, il est prévu des moyens émetteurs micro-ondes 142 d'un côté de l'embase 110 en partie inférieure d'un panneau 120 et des moyens récepteurs micro-ondes associés 144 sur le côté opposé de l'embase, c'est-à-dire en partie inférieure du deuxième panneau latéral 120.

Les moyens émetteurs 142 et les moyens récepteurs 144 respectivement associés sont alignés horizontalement.

La fréquence des micro-ondes émises par les émetteurs 142 est de préférence comprise dans la gamme de 5GHz à 30GHz, avantageusement dans la gamme de 12GHz à 20GHz.

Plus précisément encore, selon l'invention, il est prévu de préférence plusieurs émetteurs 142 et plusieurs récepteurs 144, respectivement associés deux à deux, répartis à la base des panneaux 120 sur la profondeur du dispositif.

Selon l'invention, il est prévu de préférence une pluralité d'émetteurs micro-ondes 142 et de récepteurs micro-ondes 144 adaptés pour couvrir respectivement trois zones séparées correspondant au talon, à l'arche et à la semelle avant d'une chaussure.

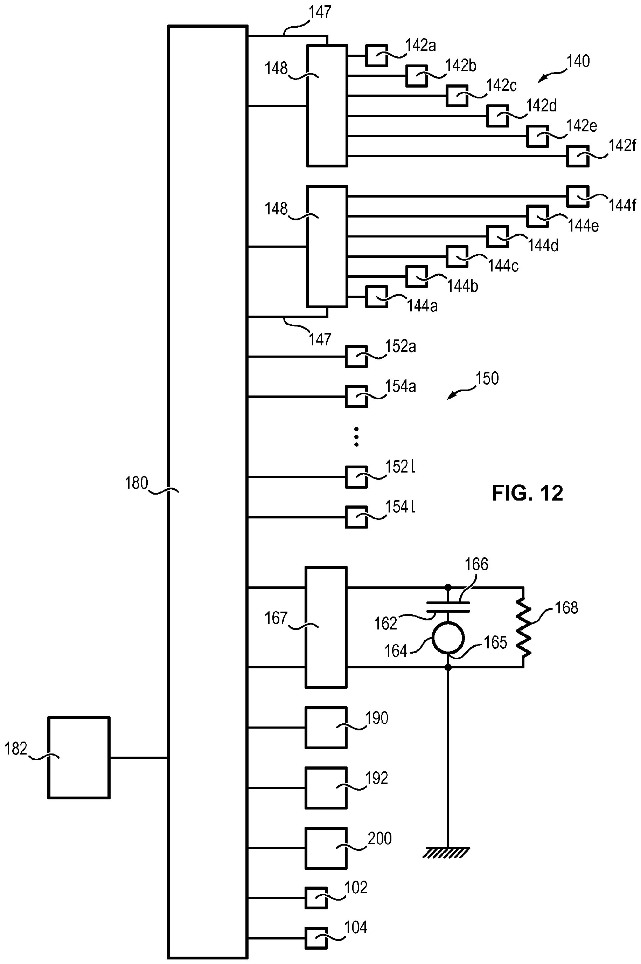

Selon le mode de réalisation particulier représenté sur les figures annexées, il est ainsi prévu six émetteurs 142 d'un côté de l'embase et six récepteurs associés 144 sur le côté opposé de l'embase. Les émetteurs sont référencés 142a à 142f et les récepteurs sont référencés 144a à 144f sur la figure 12.

Les six émetteurs 142 et six récepteurs 144 sont répartis sous forme d'une rangée horizontale alignée 145, 146. Le cas échéant, comme illustré sur la figure 4, il peut être prévu au moins deux rangées superposées 145 et 146 comprenant chacune une pluralité d'émetteurs 142, respectivement récepteurs 144, par exemple deux rangées 145 de six émetteurs 142 et deux rangées 146 de six récepteurs 144.

La distribution de l'initiation des éléments micro-ondes associés à des cornets respectifs de focalisation 149 formant respectivement émetteur 142 d'un côté de l'embase et récepteur 144 sur le côté opposé peut être assurée par des commutateurs adaptés.

L'homme de l'art comprendra que les micro-ondes émises par un émetteur 142 d'un côté de l'embase, traversent la semelle d'une chaussure placée sur l'empreinte 112 avant d'atteindre un récepteur 144 placé en regard.

Les caractéristiques diélectriques de la semelle ainsi intercalées entre un émetteur 142 et un récepteur 144 influencent le délai de transmission des micro-ondes et l'absorption de celles-ci.

Par analyse du retard entre l'émission par un émetteur 142 et la réception sur le récepteur 144 associé, ainsi que l'amplitude des micro-ondes reçues sur un récepteur 144 par rapport à la référence émise par l'émetteur 142 associé, l'on peut ainsi connaître les caractéristiques diélectriques de la semelle intercalée.

Par comparaison avec une cartographie de matériaux de référence, l'on peut ainsi par analyse du retard et de l'amplitude des micro-ondes reçues sur un récepteur 144, caractériser la nature du produit composant la semelle de la chaussure concernée.

En particulier, l'on peut ainsi caractériser des explosifs possédant une signature caractéristique en délai de transmission et absorption.

La commande des émetteurs micro-ondes 142 et des récepteurs micro-ondes 144, l'analyse du retard de transmission au niveau de chaque récepteur 144 et la comparaison précitée, peuvent être réalisées par un processeur référencé 180 sur la figure 12. Sur cette figure 12 on a schématisé en 182 une mémoire associée au processeur 180, qui contient la cartographie préétablie de matériaux de référence.

Comme on l'a schématisé sur la figure 3, le processus d'analyse peut prendre en compte les micro-ondes reçues en direct par un cornet récepteur 149 placé rigoureusement en regard d'un émetteur 142 (schématisé en « D » sur la figure 3), mais également en option les micro-ondes provenant d'un cornet émetteur 142 oblique (schématisé en « O » sur la figure 3).

Cette disposition conforme à l'invention destinée à prendre en compte sur un récepteur 144 non seulement le signal d'un émetteur 142 placé directement en regard, mais également le signal provenant d'un moyen émetteur 142 placé en oblique par rapport au moyen récepteur 144, s'applique non seulement pour un moyen récepteur oblique dans le sens horizontal, mais également pour un moyen récepteur oblique dans le sens vertical,

La prise en compte du signal provenant d'un moyen émetteur oblique dans le sens vertical, c'est-à-dire provenant d'un moyen émetteur situé à une hauteur différente du moyen récepteur alors associé en oblique, soit à une hauteur supérieure à celle du moyen récepteur ou à une hauteur inférieure à celui-ci, permet d'obtenir une information sur la hauteur de la semelle de la chaussure sous test. En effet non seulement lorsque la semelle a une hauteur inférieure à celle des couples émetteurs 142 et récepteurs 144 alignés horizontalement qui sont les plus élevés, ces récepteurs élevés 144 reçoivent un signal direct différent du signal direct horizontal reçu par des récepteurs 144 moins élevés, mais en outre les paires de couples émetteurs 142 et récepteurs 144 associés en oblique verticale génèrent un signal proportionnel à la hauteur de la semelle sous test, puisque le volume de matière de la semelle intercalé entre un tel émetteur 142 et récepteur 144 obliques en vertical dépend directement de la hauteur de la semelle.

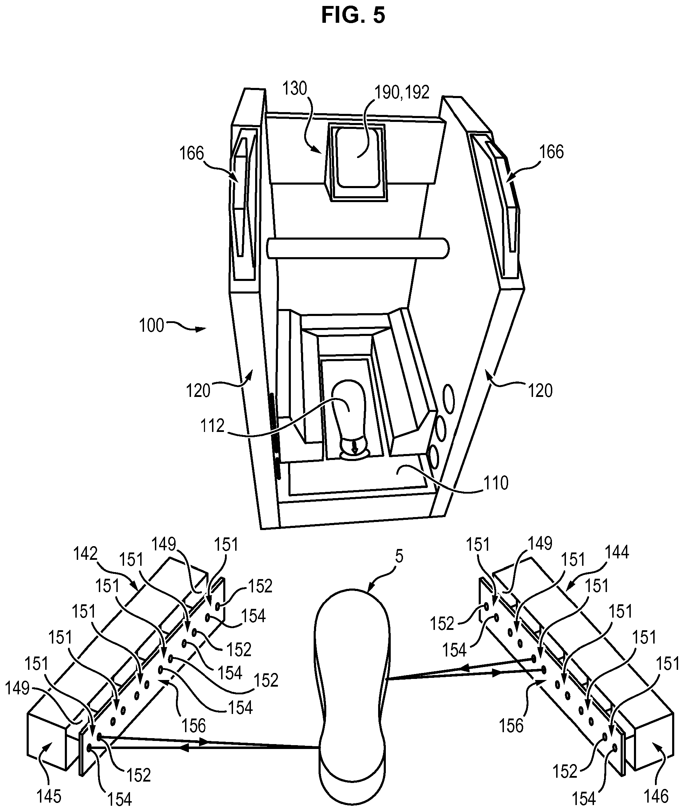

Comme on l'a indiqué précédemment dans le cadre de l'invention, comme illustré sur les figures 5 et 12, il est également prévu des moyens de mesure de la largeur de l'élément S intercalé entre un élément émetteur micro-ondes 142 et un élément récepteur micro-ondes 144.

Ces moyens de mesure de largeur sont de préférence formés à base de moyens émetteurs/récepteurs infra-rouges.

Dans le cadre de l'invention, comme on l'a illustré sur la figure 5, il est ainsi prévu une pluralité de paires 151 de moyens émetteurs 152 et récepteurs respectivement associés 154, de chaque côté de l'embase 110.

En d'autres termes il est prévu par exemple une première paire de transducteurs infra-rouges comprenant un moyen émetteur 152 et un moyen récepteur respectivement associé 154 sur un premier côté de l'embase 110, et en regard, une seconde paire de transducteurs infrarouges comprenant un autre moyen émetteur 152 et un autre moyen récepteur respectivement associé 154 sur le second côté opposé de l'embase 110.

Le dispositif comprend en outre des moyens d'analyse du temps aller-retour des infra-rouges entre un émetteur 152 et le récepteur 154 associés. Les infra-rouges émis par un émetteur 152 sont réfléchis sur la surface extérieure de la semelle S avant d'être récupérées par le récepteur 154 associé adjacent. Les moyens d'analyse du temps aller-retour des infra-rouges entre un émetteur 152 et le récepteur 154 associé sont de préférence formé par le processeur 180.

Les émetteurs infra-rouges 152 et récepteurs infra-rouges 154 associés sont de préférence placés sur une carte 156 transparente aux micro-ondes, placée en regard de l'embouchure de sortie des cornets précités 149.

De préférence, le pas des émetteurs 152/récepteurs 154 infrarouges, c'est-à-dire la distance séparant deux de telles paires d'émetteurs 152 et récepteurs 154, est identique à celui des émetteurs 142/récepteurs 144 micro-ondes.

En d'autres termes, il est prévu de préférence de chaque côté de l'embase 110, un couple émetteur 152/récepteur 154 infra-rouge associé respectivement à chaque émetteur micro-ondes 142 et chaque récepteur micro-ondes 144.

Plus précisément encore de préférence les couples émetteurs 152/récepteurs 154 infrarouges, ont la même répartition que les paires d'émetteurs 142/récepteurs 144 micro-ondes. Typiquement il est ainsi prévu une paire d'émetteur 152/récepteur 154 infrarouges en regard de chaque paire d'émetteur 142/récepteur 144 micro-ondes. Cette disposition permet d'assurer que la zone visée par une paire d'émetteur 152/récepteur 154 infrarouges est la même que celle concernée par une paire d'émetteur 142/récepteur 144 micro-ondes respectivement associée et permet par conséquent une corrélation simple, fiable et rigoureuse entre les informations issues d'une paire d'émetteur 152/récepteur 154 infrarouges et celle issue d'une paire d'émetteur 142/récepteur 144 micro-ondes respectivement associée.

Il est ainsi prévu de préférence six paires d'émetteurs 152 et de récepteurs 154 sur un premier côté de la semelle et six paires d'émetteurs 152 et de récepteurs 154 en regard sur le second côté opposé de la semelle.

Les émetteurs infrarouges sont référencés 152a à 152l et les récepteurs infrarouges sont référencés 154a à 154l sur la figure 12.

Connaissant la largeur de la semelle S intercalée entre un émetteur micro-ondes 142 et le récepteur micro-ondes 144 associé, grâce à la mesure infrarouge, le dispositif conforme à l'invention peut procéder à une normalisation par unité de taille, du retard de transmission et de l'amplitude du signal micro-ondes reçu sur un récepteur 144.

La normalisation précitée peut être réalisée par le processeur 180.

En d'autres termes, avant normalisation une zone A d'une semelle ayant une largeur double d'une zone B, en matériau identique, présente en principe un retard de transmission et une atténuation double de la zone B. Après mesure des largeurs des zones A et B et normalisation du retard et de l'absorption, à matériau identique, les deux zones A et B auront néanmoins des caractéristiques identiques en terme de retard de transmission des microondes et absorption.

Par ailleurs des zones A et C d'une semelle formées au moins en partie de matériaux différents et ayant donc des propriétés différentes en termes de transmission de micro-ondes, par exemple dans le cas d'une zone C logeant un objet non autorisé, auront des réponses différentes quant au retard de transmission et à l'absorption.

Ceci est illustré sur les figures 9 à 11.

La figure 9a représente schématiquement le profil d'une semelle de chaussure S formée d'un matériau homogène.

La figure 9b représente la courbe de délai de transmission mesurée à l'aide des émetteurs 142/récepteurs 144 microondes tandis que la figure 9c représente la courbe d'absorption mesurée à l'aide des mêmes moyens émetteurs 142/récepteurs 144 microondes lorsque la semelle de chaussure précitée S est intercalée entre les moyens émetteurs 142 et les moyens récepteurs 144. La semelle S étant en un matériau homogène, logiquement les courbes des figures 9b et 9c sont globalement homothétiques de l'épaisseur de matériau de la semelle traversé par les micro-ondes.

La figure 9d représente la courbe de mesure de largeur obtenue à l'aide des moyens émetteurs/récepteurs infrarouge sur la semelle S.

Les figures 9e et 9f représentent des courbes de délai de transmission et d'absorption basées sur les courbes des figures 9b et 9c, mais après normalisation par unité de taille sur la base de la courbe de la figure 9d. Comme on le voit sur les figures 9e et 9f, le matériau de la semelle S étant homogène, les courbes normalisées des figures 9e et 9f sont globalement constantes.

La normalisation permet de déterminer aisément que la semelle est en matériau homogène.

La figure 10 représente des vues respectivement similaires à la figure 9 pour un profil différent de semelle de chaussure. Le profil des courbes de retard de transmission et d'absorption représentées sur les figures 10b et 10c diffèrent en conséquence des figures 9b et 9c tout en restant globalement homothétiques de l'épaisseur de matériau de la semelle traversé par les micro-ondes.

Cependant s'agissant d'une semelle composée d'un matériau homogène, comme on le voit sur les figures 10e et 10f, les courbes normalisées de retard de transmission et d'absorption redeviennent d'amplitude constante.

La figure 11 représente des vues respectivement similaires à la figure 9 pour une semelle de chaussure qui loge un corps non autorisé C ayant des caractéristiques de retard de transmission de micro-ondes et d'absorption de micro-ondes différentes de celle composant la semelle S.

L'on voit à l'examen comparé des figures 11b et 11e, respectivement 11c et 11f, que la normalisation permet de faire clairement ressortir l'anomalie due à la présence du corps non autorisé C. La comparaison des amplitudes des courbes normalisées ainsi obtenues avec une bibliothèque de caractéristiques préenregistrées de produits spécifiques recherchés, permet d'identifier ces produits.

Les informations disponibles sur les récepteurs 144 permettent également de détecter des échos micro-ondes renvoyés horizontalement sur des interfaces de la semelle et ainsi détecter des stratifications formées par une juxtaposition dans le sens horizontal de couches de matériaux présentant des propriétés différentes à l'égard de la propagation des micro-ondes, résultant par exemple de la présence de poches au sein de la semelle.

Comme on l'a indiqué précédemment, selon l'invention, il est prévu en outre de préférence des moyens 160 de mesure de l'épaisseur de la semelle de la chaussure.

Selon une première variante conforme à l'invention, ces moyens de mesure 160 sont de type capacitif.

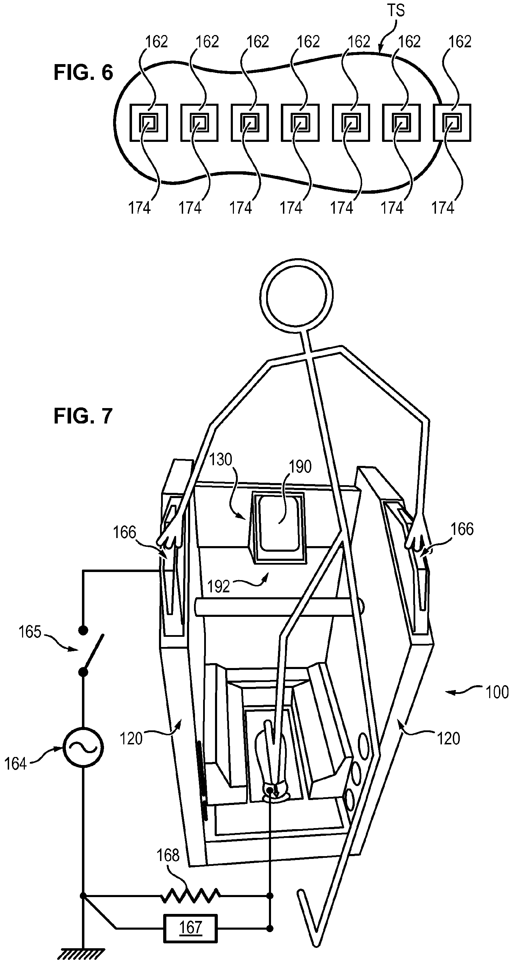

Comme illustré sur la figure 6, selon l'invention, il est prévu de préférence des électrodes 162 sur la surface supérieure de l'empreinte 112, affleurant la surface supérieure de l'empreinte 112 ou dépassant légèrement en saillie au dessus de cette empreinte 112.

Plus précisément encore, il est prévu de préférence différentes zones distinctes d'électrodes 162 coïncidant quant à leur localisation sur la profondeur du dispositif avec les différentes zones de détection micro-ondes. Il est ainsi prévu de préférence au moins six zones d'électrodes 162 réparties sur la profondeur de l'embase 110.

Cette disposition permet d'assurer que la zone située en regard d'une électrode 162 est la même que celle concernée par une paire d'émetteur 142/récepteur 144 micro-ondes respectivement associée et permet par conséquent une corrélation simple, fiable et rigoureuse entre les informations issues d'une mesure capacitive d'épaisseur et celle issue d'une paire d'émetteur 142/récepteur 144 micro-ondes respectivement associée.

Chaque électrode 162 peut être formée d'une pluralité de pointes ou d'une forme équivalente par exemple sous forme de plots.

Cependant de préférence chaque électrode 162 a une forme annulaire entourant coaxialement le cornet 174 d'un émetteur micro-ondes 172 dont on explicitera par la suite la fonction, comme illustré sur la figure 6.

Les électrodes en forme d'anneau 162 sont isolées des cornets précités des émetteurs micro-ondes 172 pour ne pas perturber les mesures respectives de ces différents moyens.

A titre d'exemple non limitatif les dimensions extérieures des électrodes 162 peuvent être typiquement de l'ordre de 30 mm x 30 mm, tandis que la largeur des cônes 174 au niveau de leur plus grande largeur est comprise entre 10 et 15 mm, l'intervalle entre les électrodes 162 et les cônes étant au moins égale à 1 mm.

Le dispositif comprend en outre un générateur électrique 164, typiquement un générateur de courant alternatif, schématisé sur la figure 7, relié par l'intermédiaire d'un interrupteur 165 en série des électrodes précitées 162 et des poignées 166 formant électrodes prévues sur les surfaces supérieures des panneaux latéraux 120 et destinées à être tenues par un individu sous test.

Les électrodes 162 prévues au niveau de l'empreinte 112 et les poignées 166 formant électrodes prévues au niveau des surfaces supérieures des panneaux latéraux 120 peuvent faire l'objet de nombreuses variantes de réalisation. Elles peuvent être formées par des plages électriquement conductrices adaptées, par exemple des plages métalliques ou tous moyens équivalents. Selon un mode de réalisation particulier ces électrodes sont formées par un matériau comportant des particules électriquement conductrices, par exemple des nanotubes, intégrées pour former électrodes. Une telle réalisation des électrodes 166 par intégration de particules électriquement conductrices dans la masse des panneaux latéraux 120, et non pas sous forme d'un élément métallique superposé au bord supérieur des panneaux 120, permet de rassurer les individus sous test auxquels on demande de placer les mains sur les panneaux 120 en évitant de leur donner le sentiment de contacter des plages placées sous tension électrique.

Le générateur électrique 164 est adapté pour émettre typiquement une tension alternative comprise entre 0,1V et 10V, avantageusement de l'ordre de 1 volt, sous une impédance de 10kΩ, et ce à une fréquence de préférence comprise entre 1 et 10kHz.

L'invention n'est cependant pas limitée à cette valeur particulière de tension, ni de fréquence.

La capacité définie entre les électrodes 162 et 166 dépend essentiellement de la hauteur ou épaisseur de la semelle de la chaussure. La valeur de l'impédance de cette capacité représentée par la semelle est par ailleurs élevée par rapport à celle du corps humain intercalé entre les mêmes électrodes 162 et 166.

L'interrupteur 165 est fermé lorsque l'on souhaite procéder à la mesure.

La mesure de la capacité entre d'une part les électrodes 162 prévues sur la surface supérieure de l'embase 110 et donc sous-jacentes à la surface inférieure d'une semelle et d'autre part les électrodes 166 prévues sur les surfaces supérieures des panneaux 120, sur lesquelles reposent les mains de l'utilisateur testé, peut être réalisée par tous moyens appropriés 167 connus de l'homme de l'art, associés au processeur 180. Cette mesure permet de déterminer la capacité de la semelle et par conséquent l'épaisseur de celle-ci.

Typiquement cette mesure peut être faite par mesure de la tension au borne d'une résistance 168 placée en série des électrodes 162 et 166, dans un pont diviseur, à l'aide d'un convertisseur analogique/numérique intégré aux moyens 167. L'impédance du corps humain étant très faible par rapport à celle due à la capacité de la semelle, la tension prélevée aux bornes de la résistance 168 est directement représentative de la hauteur de la semelle.

La connaissance de l'épaisseur de la semelle permet d'affiner la fiabilité de la caractérisation du matériau analysé à partir des moyens émetteurs/récepteurs micro-ondes 140.

Bien entendu la présente invention n'est pas limitée aux modes de réalisation qui viennent d'être décrits mais s'étend à toute variante conforme à son esprit.

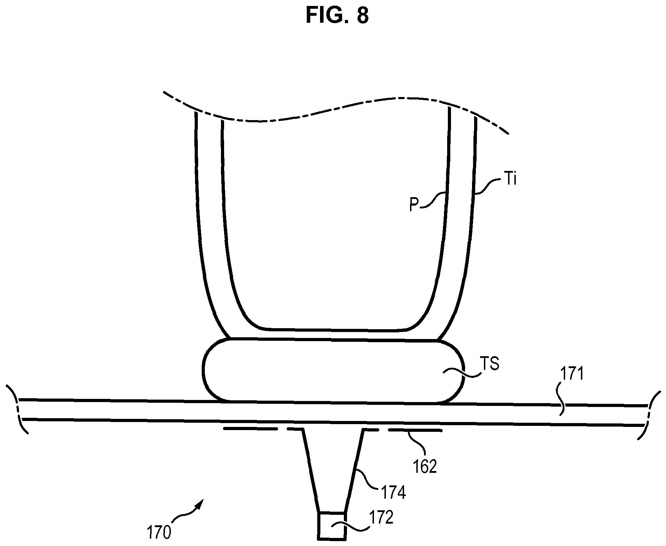

De préférence comme illustré sur la figure 8 le dispositif conforme à la présente invention comprend en outre des moyens 170 à base d'émetteurs/récepteurs micro-ondes, adaptés pour détecter des échos micro-ondes d'ondes micro-ondes émises verticalement sous l'empreinte 112, en direction du pied d'un individu.

Sur la figure 8 on a référencé 171 une couche support d'un laminé adapté pour résister à tout type de talon ou semelle TS, 172 un émetteur micro-ondes adapté pour émettre des micro-ondes verticalement vers le haut, 174 un cornet de guidage associé, 162 une électrode précédemment décrite utilisée pour une mesure capacitive, P le pied d'un individu et Ti la tige de la chaussure.

Le moyen 172 forme alternativement émetteur et récepteur ou en alternative il peut être prévu un couple d'émetteur et récepteur adjacents associés à chaque cornet 174. Les moyens récepteurs ainsi intégrés permettent de détecter les échos micro-ondes sur les différentes interfaces ou stratifications résultant d'un empilement vertical de couches successives présentant des propriétés différentes de propagation à l'égard des micro-ondes, entre la surface inférieure de la semelle ou talon TS et la surface supérieure de la semelle qui correspond à la surface inférieure du pied P.

Les moyens 170 permettent ainsi de déceler la présence de poche ou de matériau particulier au sein de la masse de la semelle ou talon TS.

La fréquence des micro-ondes émises par les émetteurs 172 est de préférence comprise dans la gamme de 5GHz à 30GHz, avantageusement dans la gamme de 12GHz à 20GHz. Elle est avantageusement distincte de la fréquence des moyens émetteurs 142.

Plus précisément encore, selon l'invention, il est prévu de préférence plusieurs émetteurs 172 et récepteurs respectivement associés deux à deux, répartis sous l'empreinte 112 sur la profondeur du dispositif.

Selon l'invention, il est prévu de préférence une pluralité d'émetteurs micro-ondes 172 et de récepteurs associés adaptés pour couvrir respectivement au moins trois zones séparées correspondant au talon, à l'arche et à la semelle avant d'une chaussure.

Selon un mode de réalisation préférentiel, il est ainsi prévu six émetteurs 172 répartis sur la longueur de l'empreinte 112.

Les émetteurs 172 et récepteurs associés peuvent être alignés ou être disposés selon toute autre modalité, par exemple en quinconce, pour couvrir de manière optimale l'ensemble des gammes de taille de semelle de chaussures existantes.

De préférence la répartition des émetteurs/récepteurs 172 sur la profondeur du dispositif est également identique à celle des émetteurs 142 et récepteurs 144, de sorte que la zone d'une semelle couverte par un ensemble émetteurs/récepteurs 172 sur la profondeur du dispositif est la même que celle couverte par un ensemble émetteur 142/récepteur 144.

Cette disposition permet d'assurer que la zone visée par une paire d'émetteur/récepteur 172 travaillant en direction verticale pour la mesure en épaisseur de la semelle est la même que celle concernée par une paire d'émetteur 142/récepteur 144 micro-ondes respectivement associée et permet par conséquent une corrélation simple, fiable et rigoureuse entre les informations issues d'une paire d'émetteur/récepteur 172 et celle issue d'une paire d'émetteur 142/récepteur 144 micro-ondes respectivement associée.

L'exploitation des signaux issus des émetteurs/récepteurs 172 peut faire l'objet de nombreux modes de réalisation.

Selon un premier mode de réalisation, les signaux issus des émetteurs/récepteurs 172 sont comparés à un signal représentatif d'une mesure de l'épaisseur de la semelle, par exemple le signal représentatif de l'épaisseur de la semelle obtenu à l'aide des électrodes 162 et de la mesure capacitive correspondante. Il peut s'agir cependant d'un signal représentatif de l'épaisseur de la semelle obtenu par tout autre moyen.

Les ensembles émetteur/récepteur 172 permettent de détecter les échos renvoyés par les interfaces de matière résultant d'un empilent vertical au sein de la semelle et de détecter la hauteur de ces interfaces par mesure du temps de transmission et de réception de ces échos.

L'écho principal est celui produit par la surface inférieure du pied qui correspond à la surface supérieure de la semelle.

Une première comparaison directe du temps de réception de cet écho principal avec le signal d'épaisseur de semelle obtenu par mesure capacitive permet d'obtenir un premier test simple.

En effet pour une semelle de faible épaisseur, le système attend la réception d'un écho principal sur la surface inférieure du pied, après un temps de transmission et réflexion court.

Inversement pour une semelle de forte épaisseur, le système attend la réception d'un écho principal sur la surface inférieure du pied, après un temps de transmission et réflexion plus important.

Si cependant le système détecte, alors que la mesure capacitive indique une semelle de forte épaisseur, un écho principal après un temps de transmission et réflexion court, la présence d'une poche ou d'un corps étranger au sein de la semelle, peut être soupçonnée.

Une normalisation des temps de réception des échos sur les récepteurs 172 en fonction de l'épaisseur de la semelle permet de faciliter la détection d'anomalie sur une semelle.

L'homme de l'art comprendra en effet à l'examen des figures 20, 21 et 22 annexées que si avant normalisation il peut être difficile d'exploiter le temps de réception des différents échos, puisque comme cela apparait sur les figures 20c, 21c et 22c, les instants réels de réception des échos sont influencés à la fois par l'épaisseur de la semelle et par les défauts d'homogénéité de la semelle, après normalisation en fonction de la hauteur de la semelle, et donc une fois le temps de réception des échos affranchi de l'influence de la hauteur de la semelle, la répartition temporelle des échos est directement représentative de la constitution verticale de la semelle.

La comparaison des figures 20d, 21d et 22d montre en effet que le rapprochement des premiers échos 1e, en principe d'amplitude faible, résultant d'une réflexion sur la surface inférieure de la semelle, et des échos principaux attendus ep est aisée. De là les échos parasites epa résultant d'une stratification verticale de la semelle, due par exemple à la présence d'une poche ou d'un corps étranger, peuvent également être aisément décelés.

En effet l'on voit par exemple sur les figures 21c et 22c que des échos parasites epa peuvent être confondus avec un écho principal ep, avant normalisation. En revanche les figures 21d et 22d montrent que après normalisation, les échos parasites epa se distinguent nettement d'un écho principal ep.

Comme on l'a illustré sur les figures 2 et suivantes, le dispositif conforme à l'invention peut être muni en outre d'un dispositif 190 de prise de vue, par exemple une caméra, associé à un système d'éclairage 192 pour affiner la surveillance du positionnement du pied sur l'embase.

Une telle caméra peut permettre de mémoriser une photographie de chaque chaussure testée et ainsi améliorer une base de données mémorisée de caractéristiques de chaussures, propre à améliorer la fiabilité des mesures ultérieures.

Elle peut également être utilisée pour aider à la mesure de la géométrie de la semelle, en particulier de la largeur de la semelle, et ainsi contribuer à améliorer la fiabilité de la détection.

Une mesure de largeur de semelle obtenue par traitement par pixel de l'image prélevée par la caméra peut être utilisée en remplacement de la mesure de largeur de semelle réalisée par les émetteurs 152/récepteurs 154 infra-rouges, ou en complément de ceux-ci.

Il a par ailleurs été constaté expérimentalement que certaines plaques d'interface support composant la surface supérieure de l'embase 110 génèrent un écho non négligeable sur les ondes verticales générées par les émetteurs 172, susceptibles de complexifier l'analyse des signaux obtenus en sortie des récepteurs associés.

Pour simplifier le traitement de signal et éviter des déperditions d'énergie dues à ces échos et donc améliorer la précision de mesure, il est également proposé dans le cadre de la présente invention d'ajouter un adaptateur de couplage des ondes émises par les émetteurs 172, dans ladite plaque support 171.

De préférence un tel adaptateur est formé d'un ensemble de blocs 310 en forme de pyramide insérés respectivement dans chaque cône 174 d'un émetteur 172.

Les différentes pyramides 310 sont de préférence venues de matière sur une plaque commune 171.

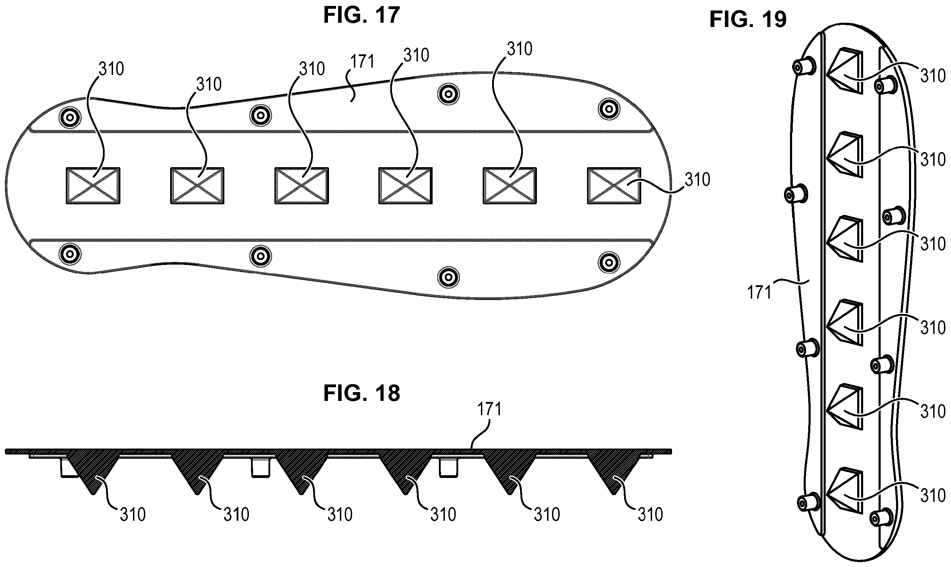

La disposition des pyramides 310 sur la plaque 171 doit bien entendu respecter la disposition et la répartition des cônes 174. Ainsi selon la représentation donnée sur les figures 17 à 19 annexées il est prévu 6 pyramides alignées disposées selon un pas identique à celui des émetteurs 172 et cornets associés 174. Cette disposition en alignement n'est cependant pas impérative, l'essentielle étant que la répartition des pyramides respecte celle des cônes 174.

Les pyramides 310 et la plaque 171 peuvent être réalisées par moulage, par exemple en polytétrafluoroéthylène ou en polystyrène.

Selon les figures 17 à 19 les pyramides 310 sont plus précisément venues de manière sur un sous ensemble de plaque support 171 dont le contour reproduit la géométrie d'une semelle et sert d'empreinte 112 pour imposer un positionnement précis de la chaussure. L'invention n'est cependant pas limitée à cette disposition précise.

Les pointes des pyramides 310 sont dirigées vers les émetteurs 172. Ainsi les micro-ondes émises par les émetteurs 172 pénètrent pratiquement sans réflexion dans les pyramides 310 par couplage progressif et se propagent dans celles-ci, traversent la plaque support 171, puis atteignent la semelle superposée.

Selon l'invention, le dispositif peut comprendre en outre des moyens de détection auxiliaires tels que des bobinages de détection de métaux, des moyens de prélèvement de vapeur ou traces de particules, par exemple des stupéfiants ou des explosifs, notamment à base de buse d'aspiration, des moyens d'analyse par résonance magnétique nucléaire, notamment à base des bobines de l'Helmholtz, des moyens d'analyse d'impédance complexe et des moyens détecteurs de radiations radio-actives. Ces moyens additionnels de mesure et détection sont schématisés sous la référence 200 sur la figure 12.

La combinaison de la mesure transversale ou horizontale obtenue à l'aides des transducteurs 142, 144 et 152, 154 d'une part et de la mesure en hauteur ou verticale obtenue à l'aide des transducteurs 170 d'autre part, ou par mesure capacitive voire par tout moyen équivalent par exemple par analyse de l'image prélevée par la caméra 190, permet d'obtenir une information sur le volume de la base de la chaussure concernée.

La combinaison de l'ensemble des informations obtenues dans le cadre de l'invention permet par ailleurs de tenir compte de la grande disparité de structures, compositions et géométries de chaussures existantes sur le marché.

L'homme de l'art comprend en effet que l'ensemble des informations obtenues dans le cadre de l'invention (mesure de l'amplitude d'absorption de micro-ondes par une bande horizontale de la semelle ou du temps de propagation des micro-ondes dans une telle bande horizontale de semelle à l'aide des moyens 142/144, mesure de la largeur de la bande horizontale correspondante de semelle à l'aide des moyens 152/154 ou 190, mesure de la hauteur de la semelle à l'aide des moyens capacitifs 162/166 ou des moyens 172/174), peuvent être rapprochées et comparées, au moins deux à deux, voire dans leur intégralité pour améliorer la fiabilité et la cohérence des résultats obtenus, tant en ce qui concerne la génération basique de détection d'une anomalie que quant à la fourniture d'une information plus précise relative à la localisation, l'importance, la géométrie et la nature d'une anomalie constatée.

On a décrit précédemment la mise en œuvre de la présente invention dans le contexte d'un dispositif dont les bases ont été précédemment décrites dans les documents FR 2860631, EP 1574879, FR 2889338 et FR 2911212, comprenant une embase support 10 formée d'une marche dont la surface supérieure comporte une empreinte 12 et une butée 14 destinés à accueillir et positionner un pied unique d'un individu revêtu d'une chaussure.

Cependant l'invention n'est pas limitée à ce mode de réalisation particulier. Comme on l'a représenté sur la figure 23 annexée, la présente invention peut également s'appliquer à des dispositifs dans lesquels l'embase support est adaptée pour recevoir simultanément les deux pieds P d'un individu.

Dans ce cas il est cependant préférable, pour permettre une détection respectivement et individuellement sur chacun des deux pieds P d'un individu sous test, de prévoir en saillie sur la surface supérieure de l'embase trois blocs 320, 330 et 340 entre lesquels doivent être positionnés les deux pieds P de sorte que le bloc central 330 soit placé entre les deux pieds P, tandis que les deux blocs latéraux 320 et 340 sont disposés respectivement sur l'extérieur des pieds. Le bloc central 330 loge des moyens de détection associés respectivement aux blocs 320 et 340 pour permettre les différentes mesures précitées respectivement sur chacun des deux pieds P. Ainsi le bloc central 330 loge dans ce cas de préférence des moyens émetteurs 142/récepteurs 144 pour la mesure de l'amplitude d'absorption des micro-ondes et du temps de propagation, ainsi que des transducteurs infra-rouges 152/154 pour la mesure de largeur de chacune des deux semelles S, séparément.

## Revendications

1. Dispositif détecteur pour la détection d'objets ou matières non autorisés, comprenant une embase support (110) conçue pour recevoir au moins un pied revêtu de sa chaussure, d'un individu à contrôler, où le dispositif comprend en outre des moyens (160) de mesure de la capacité électrique formée par la semelle d'une chaussure placée sur l'embase support (110).

2. Dispositif selon la revendication 1, **caractérisé par le fait que** les moyens (160) de mesure de la capacité électrique formée par la semelle d'une chaussure placée sur l'embase support (110) sont adaptés pour opérer une mesure de l'épaisseur de la semelle.

3. Dispositif selon l'une des revendications 1 ou 2, **caractérisé par le fait qu'**il comprend des poignées (166) placées en partie supérieure de panneaux (120) solidaires de l'embase support (110).

4. Dispositif selon la revendication 3, **caractérisé par le fait que** les poignées (166) comportent des électrodes.

5. Dispositif selon la revendication 4, **caractérisé par le fait que** les électrodes formées sur les poignées (166) sont réalisées par un matériau électriquement conducteur noyé dans la masse des panneaux (120).

6. Dispositif selon l'une des revendications 1 à 5, **caractérisé par le fait qu'**il comprend un générateur électrique (164) relié en série de poignées (166) prévues sur des panneaux latéraux (120) et des électrodes (162) placées sur l'embase support (110).

7. Dispositif selon la revendication 6, **caractérisé par le fait que** les électrodes placées sur l'embase support (110) sont concentriques de cornets (174) associés à des transducteurs micro-ondes (172) adaptés pour générer des micro-ondes verticalement dans une semelle.

8. Dispositif selon l'une des revendications 6 ou 7, **caractérisé par le fait que** le générateur électrique (164) est adapté pour générer une tension comprise entre 0,1V et 10V, de préférence de l'ordre de 1 volt.

9. Dispositif selon l'une des revendications 1 à 8, **caractérisé par le fait qu'**il comprend - des moyens émetteurs/récepteurs micro-ondes (140, 142, 144),
- des moyens (150) de mesure de la largeur d'un élément intercalé entre les moyens émetteurs/récepteurs micro-ondes (140, 142, 144),
- des moyens d'analyse d'au moins un paramètre du délai de transmission entre les moyens émetteurs/récepteurs micro-ondes (140, 142, 144) et/ou de l'amplitude du signal transmis entre les moyens émetteurs/récepteurs micro-ondes (140, 142, 144), et
- des moyens de normalisation de l'analyse précitée par rapport à une unité de taille de largeur standard obtenue sur la base des moyens de mesure de largeur (150).

10. Dispositif selon l'une des revendications 1 à 9, **caractérisé par le fait qu'**il comprend au moins un moyen émetteur micro-ondes (142) placé d'un côté de l'embase (110) et au moins un moyen récepteur micro-ondes (144) placé sur le côté opposé de l'embase (110) de sorte que les micro-ondes émis par le moyen émetteur micro-ondes (142) traversent la semelle de la chaussure placée sur l'embase support (110) avant de parvenir au moyen récepteur micro-ondes (144) associé placé sur le côté opposé de l'embase (110) et que les moyens (150) de mesure de la largeur de l'élément intercalé entre les moyens émetteur/récepteur micro-ondes (140, 142, 144), comprennent des émetteur/récepteur infra-rouges (152, 154) adaptés pour mesurer le temps de propagation aller-retour entre un émetteur infra-rouge (152) et le récepteur infra-rouge (154) associé.

11. Dispositif selon l'une des revendications 1 à 10, **caractérisé par le fait qu'**il comprend en outre des moyens (170), de préférence à base de micro-ondes, adaptés pour déceler une stratification par empilement vertical, dans la semelle, par détection d'échos successifs suite à une émission d'ondes vers la semelle.

12. Dispositif selon la revendication 11, **caractérisé par le fait qu'**il comprend une pluralité de moyens (170) adaptés pour détecter des échos successifs verticaux répartis sur la longueur du dispositif.

13. Dispositif selon l'une des revendications 1 à 12, **caractérisé par le fait qu'**il comprend un moyen (310) adaptateur de couplage micro-ondes, intercalé entre des transducteurs micro-ondes (172) et une plaque (171) support de pied.

14. Dispositif selon la revendication 13, **caractérisé par le fait que** le moyen adaptateur (310) comprend une pyramide engagée dans chaque cornet (174) associé à un transducteur micro-ondes (172), venue de matière avec la plaque support de pied (171).

15. Dispositif selon l'une des revendications 1 à 14, prise en combinaison avec la revendication 11, **caractérisé par le fait qu'**l comprend des moyens de normalisation du signal issu des moyens de détection d'une stratification verticale (172), sur la base d'un signal représentatif de la hauteur estimée de la semelle,

16. Dispositif selon l'une des revendications 1 à 15, prise en combinaison avec l'une au moins des revendications 7, 9, 10 et 13 à 15 **caractérisé par le fait que** chaque émetteur et récepteur micro-ondes (142, 144) est associé à un cornet de focalisation (149).

17. Dispositif selon l'une des revendications 1 à 16, **caractérisé par le fait qu'**il comprend plusieurs séries de moyens de détection (142, 144 ; 152, 154 ; 162 ; 172, 174) comprenant chacune plusieurs moyens de détection répartis géographiquement de manière similaire pour l'ensemble desdites séries de moyens de détection.

18. Dispositif selon l'une des revendications 1 à 17, **caractérisé par le fait qu'**il comprend un dispositif (190) de prise de vue de la chaussure, en particulier de la semelle et des moyens d'analyse du signal issu du dispositif (190) de prise de vue pour estimation d'une largeur de semelle.

19. Procédé d'analyse des signaux issus des différents moyens de mesure d'un dispositif conforme à l'une des revendications 1 à 18 et de génération d'une alarme en cas de détection d'une anomalie.

20. Procédé selon la revendications 19, **caractérisé par le fait qu'**il comprend au moins une étape de normalisation de l'amplitude des signaux obtenus à l'aide des moyens (160) de mesure de la capacité électrique formée par la semelle d'une chaussure placée sur l'embase support (110) en fonction d'une second mesure, telle qu'une mesure de la répartition temporelle d'échos se propageant verticalement en fonction d'une mesure de hauteur de la semelle.

## Patentansprüche

1. Detektorvorrichtung zum Erkennen von nicht zugelassenen Objekten oder Materialien, eine Trägerbasis (110) umfassend, die so gestaltet ist, dass sie mindestens einen mit einem Schuh bekleideten Fuß einer zu kontrollierenden Person aufnehmen kann, wo die Vorrichtung ferner Mittel (160) für die Messung der elektrischen Kapazität umfasst, die durch die Sohle eines Schuhs gebildet wird, der auf der Trägerbasis (110) angeordnet ist.

2. Vorrichtung nach Anspruch 1, **dadurch gekennzeichnet, dass** die Mittel (160) für die Messung der elektrischen Kapazität, die durch die Sohle eines Schuhs gebildet wird, der auf der Trägerbasis (110) angeordnet ist, geeignet sind, eine Messung der Dicke der Sohle durchzuführen.

3. Vorrichtung nach einem der Ansprüche 1 oder 2, **dadurch gekennzeichnet, dass** sie Griffe (166) umfasst, die im oberen Teil von Platten (120) angeordnet sind, die fest mit der Trägerbasis (110) verbunden sind.

4. Vorrichtung nach Anspruch 3, **dadurch gekennzeichnet, dass** die Griffe (166) Elektroden aufweisen.

5. Vorrichtung nach Anspruch 4, **dadurch gekennzeichnet, dass** die auf den Griffen (166) geformten Elektroden aus einem elektrisch leitfähigen Werkstoff bestehen, der in die Masse der Paneele (120) eingebettet ist.

6. Vorrichtung nach einem der Ansprüche 1 bis 5, **dadurch gekennzeichnet, dass** sie einen elektrischen Generator (164) umfasst, der als Reihe von Griffen (166) angeschlossen ist, die auf Seitenpaneelen (120) und auf auf der Trägerbasis (110) angeordneten Elektroden (162) vorgesehen sind.

7. Vorrichtung nach Anspruch 6, **dadurch gekennzeichnet, dass** die auf der Trägerbasis (110) angeordneten Elektroden konzentrisch zu Hörnern (174) sind, die mit Mikrowellenwandlern (172) verbunden sind, die zur Erzeugung von vertikalen Mikrowellen in einer Sohle geeignet sind.

8. Vorrichtung nach einem der Ansprüche 6 oder 7, **dadurch gekennzeichnet, dass** der elektrische Generator (164) zur Erzeugung einer Spannung zwischen 0,1 V und 10 V geeignet ist, vorzugsweise in der Größenordnung von 1 Volt.

9. Vorrichtung nach einem der Ansprüche 1 bis 8, **dadurch gekennzeichnet, dass** sie - Mikrowellenpfänger-/-sendemittel (140, 142, 144) umfasst,
- Mittel (150) zur Breitenmessung eines Elements, das zwischen Mikrowellenpfänger-/-sendemitteln (140, 142, 144) eingefügt ist,
- Mittel zur Analyse mindestens eines Parameters der Übertragungszeit zwischen den Mikrowellenpfänger-/- sendemitteln (140, 142, 144) und/oder der Amplitude des zwischen den Mikrowellenpfänger-/-sendemitteln (140, 142, 144) übertragenen Signals, und
- Mittel zur Normalisierung der vorgenannten Analyse in Bezug auf eine Größeneinheit der Standardbreite, die auf der Grundlage der Mittel zur Breitenmessung (150) erhalten wurde.

10. Vorrichtung nach einem der Ansprüche 1 bis 9, **dadurch gekennzeichnet, dass** sie mindestens ein Mikrowellensendemittel (142), das auf einer Seite der Basis (110) angeordnet ist, und mindestens ein Mikrowellenempfängermittel (144), das auf der gegenüberliegenden Seite der Basis (110) angeordnet ist, umfasst, so dass die von dem Mikrowellensendemittel (142) emittierten Mikrowellen durch die Sohle des auf der Trägerbasis (110) platzierten Schuhs durchdringen, bevor sie zu dem verbundenen Mikrowellenempfängermittel (144) gelangen, das auf der gegenüberliegenden Seite der Basis (110) angeordnet ist, und dass die Mittel (150) zur Breitenmessung des Elements, das zwischen den Mikrowellenempfänger-/-sendemitteln (140, 142, 144) eingefügt ist, Infrarotsender/-empfänger (152, 154) umfassen, die zum Messen der Hin- und Rücklaufzeit zwischen Infrarotsender (152) und dem verbundenen Infrarotempfänger (154) geeignet ist.

11. Vorrichtung nach einem der Ansprüche 1 bis 10, **dadurch gekennzeichnet, dass** sie ferner Mittel (170), vorzugsweise auf Basis von Mikrowellen, umfasst, die zum Erkennen einer vertikalen Stapelschichtung in der Sohle geeignet sind, eine vertikale Stapelschichtung in der Sohle zu erfassen, durch das Erkennen von aufeinanderfolgenden Echosignalen infolge einer Wellenemission in Richtung Sohle.

12. Vorrichtung nach Anspruch 11, **dadurch gekennzeichnet, dass** sie eine Vielzahl von Mitteln (170) umfasst, die geeignet sind, aufeinanderfolgende vertikale Echosignale zu erkennen, die über die Länge der Vorrichtung verteilt sind.

13. Vorrichtung nach einem der Ansprüche 1 bis 12, **dadurch gekennzeichnet, dass** sie ein Mikrowellenkopplung-Anpassungsmittel (310) umfasst, das zwischen Mikrowellenwandlern (172) und einer Fußaufnahmeplatte (171) eingefügt ist.

14. Vorrichtung nach Anspruch 13, **dadurch gekennzeichnet, dass** das Anpassungsmittel (310) eine mit der Fußaufnahmeplatte (171) einstückig geformten Pyramide umfasst, die in jedem mit einem Mikrowellenwandler (172) verbundenen Horn (174) eingelassen ist.

15. Vorrichtung nach einem der Ansprüche 1 bis 14 in Kombination mit Anspruch 11, **dadurch gekennzeichnet, dass** sie Mittel zur Normalisierung des von den Mitteln zum Erkennen einer vertikalen Schichtung (172) ausgesendeten Signals umfasst, auf der Grundlage eines Signals, das repräsentativ für die geschätzte Höhe der Sohle ist,

16. Vorrichtung nach einem der Ansprüche 1 bis 15 in Kombination mit mindestens einem der Ansprüche 7, 9, 10 und 13 bis 15, **dadurch gekennzeichnet, dass** jeder Mikrowellenempfänger und -sender (142, 144) mit einem Fokussierungshorn (149) verbunden ist.

17. Vorrichtung nach einem der Ansprüche 1 bis 16, **dadurch gekennzeichnet, dass** sie mehrere Reihen von Erkennungsmitteln (142, 144; 152, 154; 162; 172, 174) umfasst, die jeweils mehrere Erkennungsmittel umfassen, die für die Gesamtheit der Reihen von Erkennungsmitteln geographisch auf ähnliche Weise verteilt sind.

18. Vorrichtung nach einem der Ansprüche 1 bis 17, **dadurch gekennzeichnet, dass** sie eine Vorrichtung (190) zur Aufnahme des Schuhs insbesondere der Sohle, und Mittel zur Analyse des von der Vorrichtung (190) zur Aufnahme ausgesendeten Signals zur Schätzung der Breite einer Sohle umfasst.

19. Verfahren zur Analyse der Signale, die von den verschiedenen Messmitteln einer Vorrichtung ausgesendet werden, die einem der Ansprüche 1 bis 18 entspricht, und zur Erzeugung eines Alarmsignals bei Erkennen einer Anomalie.

20. Verfahren nach Anspruch 19, **dadurch gekennzeichnet, dass** es mindestens einen Normalisierungsschritt der Amplitude der Signale umfasst, die mit Hilfe der Mittel (160) für die Messung der elektrischen Kapazität erhalten werden, die von der Sohle eines auf der Trägerbasis (110) platzierten Schuhs gebildet wird, in Abhängigkeit von einer zweiten Messung, wie einer Messung der zeitlichen Verteilung der sich vertikal ausbreitenden Echosignale in Abhängigkeit von einer Messung einer Sohlenhöhe.

## Claims

1. A detector device for detection of unauthorised objects or substances, comprising a support base (110) designed to receive at least one foot covered by its shoe, of an individual to be controlled, wherein the device further comprises measurement means (160) of the electrical capacity formed by the sole of a shoe placed on the support base (110).

2. The device as claimed in Claim 1, **characterised by** the fact that measurement means (160) of the electrical capacity formed by the sole of a shoe placed on the support base (110) are adapted to operate a measurement of the thickness of the sole.

3. The device as claimed in any one of Claims 1 or 2, **characterised by** the fact that it comprises handles (166) placed on the upper part of panels (120) integral with the support base (110).

4. The device as claimed in Claim 3, **characterised by** the fact that the handles (166) comprise electrodes.

5. The device as claimed in Claim 4, **characterised by** the fact that the electrodes formed on the handles (166) are made from electrically conductive material embedded in the mass of the panels (120).

6. The device as claimed in any one of Claims 1 to 5, **characterised by** the fact that it comprises an electric generator (164) connected in series with handles (166) provided on lateral panels (120) and electrodes (162) placed on the support base (110).

7. The device as claimed in Claim 6, **characterised by** the fact that the electrodes placed on the support base (110) are concentric with cones (174) associated with microwave transducers (172) adapted to generate microwaves vertically in a sole.

8. The device as claimed in any one of Claims 6 or 7, **characterised by** the fact that the electric generator (164) is adapted to generate voltage of between 0.1V and 10V, preferably of the order of 1 volt.

9. The device as claimed in any one of Claims 1 to 8, **characterised by** the fact that it comprises
- microwave sender/receiver means (140, 142, 144),
- measuring means (150) of the width of an element inserted in between the microwave sender/receiver means (140, 142, 144),
- analysis means of at least one parameter of the transmission time between the microwave sender/receiver means (140, 142, 144) and/or the amplitude of the signal transmitted between the microwave sender/receiver means (140, 142, 144), and
- normalisation means of the abovementioned analysis relative to a size unit of standard width obtained on the basis of width measuring means (150).

10. The device as claimed in any one of Claims 1 to 9, **characterised by** the fact that it comprises at least one microwave sender means (142) placed to one side of the base (110) and at least one microwave receiver means (144) placed on the side opposite the base (110) such that the microwaves emitted by the microwave sender means (142) pass through the sole of the shoe placed on the support base (110) before reaching the associated microwave receiver means (144) placed on the side opposite the base (110) and that the measurement means (150) of the width of the element inserted in between the microwave sender/receiver means (140, 142, 144), comprise infrared sender/receivers (152, 154) adapted to measure the time of two-way propagation between an infrared sender (152) and the associated infrared receiver (154).

11. The device as claimed in any one of Claims 1 to 10, **characterised by** the fact that it also comprises means (170), preferably based on microwave, adapted to detect stratification by vertical stacking, in the sole, by detection of successive echoes following emission of waves towards the sole.

12. The device as claimed in Claim 11, **characterised by** the fact that comprises a plurality of means (170) adapted to detect successive vertical echoes distributed over the length of the device.

13. The device as claimed in any one of Claims 1 to 12, **characterised by** the fact that it comprises microwave adapter coupling means (310), inserted in between microwave transducers (172) and a foot support plate (171).

14. The device as claimed in Claim 13, **characterised by** the fact that the adapter means (310) comprises a pyramid engaged in each cone (174) associated with a microwave transducer (172), integral with the foot support plate (171).

15. The device as claimed in any one of Claims 1 to 14, taken in combination with Claim 11, **characterised by** the fact that it comprises normalization means of the signal coming from detection means of vertical stratification (172), on the basis of a signal representative of the estimated height of the sole.

16. The device as claimed in any one of Claims 1 to 15, taken in combination with at least one of Claims 7, 9, 10 and 13 to 15 **characterised by** the fact that each microwave sender and receiver (142, 144) is associated with a focusing cone (149).

17. The device as claimed in any one of Claims 1 to 16, **characterised by** the fact that it comprises several series of detection means (142, 144; 152, 154; 162; 172, 174) each comprising several detection means distributed geographically similarly for all said series of detection means.

18. The device as claimed in any one of Claims 1 to 17, **characterised by** the fact that it comprises an imaging device (190) of the shoe, in particular of the sole analysis means of the signal coming from the imaging device (190) for estimation of a sole width.

19. A method for analysis of signals coming from the different measuring means of a device as claimed in any one of Claims 1 to 18 and generation of an alarm in case of detection of an anomaly.

20. The method as claimed in Claim 19, **characterised by** the fact that it comprises at least one normalization step of the amplitude of resulting signals using measurement means (160) of the electrical capacity formed by the sole of a shoe placed on the support base (110) as a function of a second measurement, such as the temporal distribution of echoes spreading vertically as a function of measurement of height of the sole.
